Europäisches Patentamt

European Patent Office

Office européen des brevets

(11) Veröffentlichungsnummer: **0 286 025 B1**

## (12) EUROPÄISCHE PATENTSCHRIFT

(45) Veröffentlichungstag der Patentschrift: **22.01.92**

(21) Anmeldenummer: **88105272.4**

(22) Anmeldetag: **31.03.88**

(51) Int. Cl.⁵: **A22C 13/00**

(54) **Permanent weichgemachter Formkörper auf Basis von Cellulose.**

(30) Priorität: **06.04.87 DE 3711571**

(43) Veröffentlichungstag der Anmeldung:
**12.10.88 Patentblatt 88/41**

(45) Bekanntmachung des Hinweises auf die
Patenterteilung:
**22.01.92 Patentblatt 92/04**

(84) Benannte Vertragsstaaten:
**AT BE CH DE FR GB IT LI NL SE**

(56) Entgegenhaltungen:
**EP-A- 0 100 056**
**DE-A- 2 362 551**
**FR-A- 2 372 861**
**US-A- 4 142 013**

(73) Patentinhaber: **HOECHST AKTIENGESELL-SCHAFT**
**Postfach 80 03 20**
**W-6230 Frankfurt am Main 80(DE)**

(72) Erfinder: **Hammer, Klaus-Dieter, Dr.**
**An der Hasenquelle 25**
**W-6500 Mainz 1(DE)**
Erfinder: **Siebrecht, Manfred, Dr.**
**Buchenweg 10**
**W-6200 Wiesbaden-Naurod(DE)**
Erfinder: **Winter, Hermann**
**Am Schlosspark 93**
**W-6200 Wiesbaden-Biebrich(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung bezieht sich auf einen Formkörper auf Basis von Cellulosehydrat, der durch einen primären Weichmacher permanent weichgemacht ist und gegebenenfalls einen zusätzlichen sekundären Weichmacher enthält. Der Formkörper ist vorzugsweise eine Folie, insbesondere ein Schlauch. Die Erfindung bezieht sich ferner auf Verfahren zur Herstellung dieses Formkörpers und seine Verwendung in Form einer faserverstärkten Folie. Cellulosehydrat-Formkörper werden bekanntlich nach dem Viskose-Verfahren hergestellt. Die allgemein als Viskoselösung bezeichnete alkalische Cellulosexanthogenat-Lösung wird z.B. durch eine ring- oder schlitzförmige Düse ausgepreßt und mit saurer Lösung als Cellulosehydrat-Gel koaguliert und zu Cellulosehydrat regeneriert. Durch die Zusammensetzung der Viskose und Einarbeiten von Zusatzstoffen lassen sich die Eigenschaften des Formkörpers aus regenerierter Cellulose variieren. Bei der Herstellung faserverstärkter Schläuche wird ein schlauchförmiger Faserstoff auf seiner Außen- und Innenseite mit Viskose beschichtet und in entsprechender Weise mit Koagulations- und Regenerierflüssigkeit behandelt.

Es ist bekannt, daß Formkörper aus Cellulosehydrat durch Wasser- und Weichmacherverlust während der Lagerung mehr und mehr verspröden und verhärten. Diese Erscheinung ist auf eine im Cellulosematerial vor sich gehende Kristallisation zurückzuführen, wobei es im Cellulosegefüge zur Ausbildung von Wasserstoffbrückenbindungen zwischen den einzelnen Cellulosemolekülketten und damit zu einer Annäherung und räumlichen Fixierung der Moleküle kommt. Dieser Kristallisations- und Strukturveränderungsprozeß hat eine zeitlich fortschreitende Verminderung bestimmter physikalischer Eigenschaften, insbesondere der Dehnung, der Festigkeit und des Quellwertes der Formkörper zur Folge; außerdem bedingt er eine starke Schrumpfung des Formkörpers, so daß bei schlauchförmigen Verpackungen auf Basis von Cellulose ein starker Druckanstieg auf das umhüllte Produkt festzustellen ist.

Dieser in Formkörpern aus Cellulosehydrat allmählich vor sich gehende Strukturveränderungsprozeß und die damit einhergehende nachteilige Versprödung der Formkörper läßt sich durch Zusatz von wasserlöslichen, sog. sekundären Weichmachern kaum verhindern. Sekundäre Weichmacher, wie beispielsweise Glycerin, Glykol oder Polyglykol, können zwar die Weichheit und Griffigkeit des Formkörpers verbessern. Da sekundäre Weichmachungsmittel nicht durch chemische Bindung an die Cellulosehydratmoleküle gebunden sind, sondern nur durch zwischenmolekulare Kräfte, neigen sie dazu, aus dem Formkörper auszuwandern oder werden insbesondere beim Wässern des Formkörpers, wie es bei Wursthüllen aus diesem Material vor dem Füllen mit Wurstbrät üblich ist, quantitativ herausgelöst.

Die Folge ist ein besonders starkes Verspröden des weichmacherfreien getrockneten Cellulosematerials. Wursthüllen mit einer inneren Sperrschicht, bei denen die Feuchtigkeit aus der Wurstmasse nicht in die Celluloseschicht gelangen kann, werden stoßempfindlich und neigen dazu, beim ersten Anschneiden der Wurst über ihre ganze Länge einzureißen. Es ist deshalb üblich, die Wurst vor dem ersten Anschnitt mit kaltem Wasser kurz anzufeuchten, wenn sie eine solche Wursthaut aufweist. Diese Maßnahme kann aber nicht verhindern, daß die Wurstmasse durch den hohen Innendruck aus der Schnittfläche sich herauswölbt oder sogar herausgedrückt wird.

Zur Vermeidung dieser Nachteile wurde auch schon beschrieben, die Geschmeidigkeit des Cellulosehydrats durch den Zusatz von vernetzungsfähigen chemischen Substanzen als sogenannte primäre Weichmacher zu verbessern (DE-A-23 62 551 = US-A-4,002,712, DE-A-26 54 417 = US-A-4,198,325). Unter einem primären, das Cellulosehydrat permanent weichmachenden Stoff sind Verbindungen zu verstehen, die im Gegensatz zu sekundären Weichmachern nicht mit Wasser extrahierbar und im Formkörper verankert sind. Die bekannten primären Weichmacher bringen aber noch keine befriedigende Problemlösung. Ein Nachteil der bekannten, nicht extrahierbaren Weichmacher besteht darin, daß das Cellulosematerial an sich sehr große Mengen an diesen Verbindungen enthalten müßte, um einen optimalen Effekt zu erzielen. Wegen der damit verbundenen deutlichen Verschlechterung der mechanischen Eigenschaften des Cellulosematerials hat sich dieses Verfahren in der Praxis bisher nicht durchgesetzt.

Man hat deshalb auch schon versucht, zur Vermeidung dieser Nachteile auf die Außenseite der Wursthülle auf Basis von Cellulose einen Überzug aus elastomeren Kunststoff aufzubringen (EP-B-0 001 545 = US-A-4,287,217). Dieser Überzug hat den optimalen Effekt allerdings erst dann, wenn er ein Flächengewicht von mindestens 5 -8 $g/m^2$ aufweist, d.h., wenn er relativ dick ist. Ein so großes Flächengewicht ist aber zu vermeiden, denn eine solche Kunststoffschicht bildet bereits eine merkliche äußere Barriereschicht gegenüber Wasser, so daß Probleme beim Wässern der Wursthülle vor dem Füllprozeß auftreten, insbesondere, wenn auf der Innenseite der Hülle eine Wasserdampf- und Sauerstoffsperrschicht vorgesehen ist. Es hat sich gezeigt, daß Überzüge aus diesem elastomeren Kunststoff dazu neigen, sich beim Kochen der Wurst von der Celluloseoberfläche abzulösen, so daß gewöhnlich eine zusätzliche Verankerungsschicht zur Verbesserung der Haftung erforderlich ist. Das Aufbringen dieser zusätzlichen Schicht macht weitere Verfahrensstufen erforderlich und verteuert somit das Produkt. Es ist auch bekannt, den gleichen äußeren Überzug in einer deutlich geringeren Menge (80-500 mg/m$^2$) bei Hüllen ohne Sperrschicht einzusetzen (EP-A-0 100 056 = US-A-4,529,634). Dieser Überzug soll den enzymatischen Abbau der Cellulose durch cellulytische Enzyme verhindern, wie er bei der Lagerung von Rohwurst- und Salamitypen eintreten kann. Es wurde aber festgestellt, daß dieser Überzug keine ausreichende Wirkung zeigt. In größeren, wirksameren Mengen kommt es zu einer unerwünschten Verringerung der Wasserdampfdurchlässigkeit, wodurch die Trocknung der Wurst verzögert und ihre Reifung beeinträchtigt wird.

Es ist demnach Aufgabe der Erfindung, Formkörper auf Basis von Cellulose durch einen geeigneten permanenten Weichmacher so zu modifizieren, daß sich ihre Gebrauchseigenschaften, insbesondere ihre Festigkeit, Dehnfähigkeit, Quellbarkeit und Schrumpfverhalten auch nach längerer Lagerzeit nicht negativ verändern. Der Formkörper soll auch nach seiner Verarbeitung und beim Gebrauch, d.h. wenn der sekundäre Weichmacher durch Wassereinwirkung entfernt ist, noch weich und geschmeidig bleiben und nicht verspröden. Bei seiner Verwendung als Wursthülle sollen daraus hergestellte Würste selbst bei relativ geringer relativer Luftfeuchtigkeit problemlos, d.h. ohne Platzer, transportiert und ohne Einzureißen angeschnitten werden können. Diese verbesserten mechanischen Eigenschaften sollen darüber hinaus selbst dann noch erhalten bleiben, wenn der Anteil des permanenten Weichmachers relativ hoch ist, so daß der Formkörper die vorteilhaften Eigenschaften von Cellulose und Kunststoffen in Kombination aufweisen könnte.

Diese Aufgabe wird überraschenderweise bei dem Formkörper gelöst durch den in Anspruch 1 genannten permanenten Weichmacher. Die von Anspruch 1 abhängigen Ansprüche geben bevorzugte Weiterbildungen dieses Weichmachers an.

Der Formkörper hat beispielsweise die Form von Fasern, vorzugsweise ist er jedoch blatt- oder bahnförmig, worunter Flächenkörper zu verstehen sind, deren Dicke im Vergleich zu den beiden anderen Dimensionen relativ gering ist. Flächenkörper dieser Art sind Schwammtücher, wie sie für Reinigungszwecke im Haushalt bekannt sind. Sie besitzen aufgrund ihrer porigen Struktur hohes Wasseraufnahmevermögen. Weitere Flächenkörper sind relativ dünne Verpackungsfolien, die als Zellglasfolien unter dem Warenzeichen Cellophan im Handel sind. In weiterer bevorzugter Ausführungsform ist der Formkörper schlauchförmig und dient ebenfalls als Verpackungshülle, insbesondere für Lebensmittel. Insbesondere enthält der Schlauch auf Basis von Cellulose eine Faserverstärkung und wird als künstliche Wursthülle, sogenannter Faserdarm, bei der Wurstherstellung eingesetzt.

Die Celluloseschicht des Formkörpers enthält als primären Weichmacher ein spezielles Mischpolymerisat oder Gemische dieser Mischpolymerisate, vor der Verarbeitung noch einen üblichen sekundären Weichmacher, insbesondere Glycerin, und Wasser. Der Anteil des primären Weichmachers kann im Gegensatz zu den bisher bekannten permanenten Weichmachern in breiten Bereichen liegen und beträgt 1 bis 100, vorzugsweise 5 bis 90, insbesondere 10 bis 80 Gew.-%, bezogen auf die Cellulose. Die im folgenden genannten Gew.-%-Angaben zum permanenten Weichmacher beziehen sich stets auf die Cellulose. Der Anteil des sekundären Weichmachers liegt bei 4 bis 35, insbesondere 12 bis 20 Gew.-%, und der Wassergehalt bei 6 bis 30 Gew.-%, jeweils bezogen auf das Gesamtgewicht.

Das erfindungswesentliche Mischpolymerisat ist aufgebaut aus zwei oder mehr Komponenten. Wenigstens eine dieser Komponenten ist eine Monomer-Einheit mit einer endständigen äthylenisch ungesättigten polymerisierbaren Gruppe oder Maleinsäure- oder Fumarsäureverbindungen, insbesondere die in Anspruch 2 und 4 genannten Monomer-Einheiten.

Die Komponente mit dem größten Anteil umfaßt bevorzugt Methacrylsäureester- oder Acrylsäureester-Einheiten. Der alkoholische Rest der Methacrylsäureester- bzw. Acrylsäureester-Einheiten hat vorzugsweise 1 bis 8, insbesondere 2 bis 6 C-Atome, wie z.B. Ethyl-, Propyl-, Butylmethacrylat bzw. -acrylat, wobei (Meth)acrylsäurebutylester besonders geeignet ist. Der Anteil dieser Estereinheiten im Mischpolymerisat beträgt insbesondere 50 Mol-% oder mehr. Von den weiteren in Anspruch 4 genannten Einheiten sind noch von besonderer Bedeutung: Vinylacetat-, Vinyläthyläther-, Styrol-, Vinyltoluol-, Ethylen-, Butadien-, Methacrylsäure-, Acrylsäure-, Maleinsäure-, Fumarsäure-, Itaconsäure- sowie deren Mono- und Diamide, ihre Monoester und Diester mit $(C_2\text{-}C_6)$-Alkylendiolen oder -Alkanolen und/oder ihre Nitril-Verbindungen, insbesondere Methacrylnitril und Acrylnitril. Diese sind vorzugsweise jeweils nur bis zu einem Anteil von 20 Mol-% im Mischpolymerisat vorhanden, wobei von diesen (Meth)acrylsäure und (Meth)acrylnitril besonders bevorzugt sind.

Die weitere erfindungswesentliche Komponente des Mischpolymerisats besteht aus polymerisierbaren Einheiten mit vernetzbaren Gruppen, welche bei der Herstellung des Formkörpers thermisch vernetzt werden. Diese Komponente, welche vorzugsweise mit einem Anteil von 0,5 bis 20, insbesondere 2 bis 10 Mol-%, im Mischpolymerisat vorhanden ist, umfaßt vorzugsweise N-Methylolamide von ungesättigten Carbonsäuren, wie z.B. N-Methylolderivate von Amiden der Fumarsäure oder Itaconsäure, insbesondere aber von Acrylamid, Methacrylamid und Maleinsäuremono-oder -diamid. Gegebenenfalls ist die N-Methylolgruppe veräthert mit einem aliphatischen Alkohol mit 1 bis 8, vorzugsweise 1 bis 4 C-Atomen. Die thermische Vernetzung der N-Methylolgruppen erfolgt in der Celluloseschicht.

Mischpolymerisate in dieser Zusammensetzung sind bekannt und im Handel als Bindemittel für Vliesstoffe erhältlich.

Durch den Zusatz des Mischpolymerisats in die Celluloseschicht gelingt es, die Versprödung des Materials deutlich zu verringern, insbesondere auch dann, wenn der Formkörper als schlauchförmige Verpackungshülle mit Wurstmasse gefüllt und mit heißem Wasser behandelt wurde. Die glycerinfreie, geschrumpfte und die Wurstmasse unter Druck zusammenpressende Hülle zeigt geringere Neigung zum Platzen bei Stoßbeanspruchung, insbesondere beim Transport, und zum Einreißen beim Anschneiden.

Gegenstand der Erfindung ist ferner das in Anspruch 10 genannte Verfahren.

Das Mischpolymerisat läßt sich als wäßrige Dispersion überraschenderweise ohne Probleme in die alkalische Viskoselösung einarbeiten. Es ist nur darauf zu achten, daß die wäßrige Dispersion einen pH-Wert von größer als 7,5 aufweist, um lokale Fällungen der Viskose zu vermeiden.

Das Mischpolymerisat ist mit den übrigen Komponenten, insbesondere Farbstoffpigmenten, gut verträglich, beeinträchtigt nicht das Spinnverhalten der Viskose, d.h. ergibt keine Probleme bei der Koagulation und Regenerierung der Cellulose und wird durch die verschiedenen Behandlungsflüssigkeiten nicht herausgewaschen. Es verschlechtert überraschenderweise auch nicht die mechanischen Eigenschaften des fertigen Hüllenmaterials. Diese Wirkung könnte darauf zurückzuführen sein, daß das Mischpolymerisat besonders weich ist und mit sich selbst und vermutlich auch mit den Cellulosemolekülen vernetzt ist.

Die Zugabe des sekundären Weichmachers, insbesondere Glycerin, erfolgt in üblicher Weise nach Beendigung des Koagulations- und Regenerierungsvorganges und vor dem Trocknen. Der Gehalt an sekundärem Weichmacher läßt sich mit zunehmendem Gehalt an permanenten Weichmacher ohne Nachteile bis auf Werte unter 15 Gew.-%, bezogen auf das Gesamtgewicht, verringern. Mit der Einstellung des Glyceringehaltes läßt sich auch der Schrumpf der Wursthülle nach dem Brühen oder Kochen der Wurst variieren. Je größer der Glyceringehalt in der Wursthülle, desto stärker schrumpft die Hülle.

Zur Herstellung eines als künstliche Wursthülle geeigneten Formkörpers wird der permanente Weichmacher in analoger Weise in die Viskose eingearbeitet, mit der dann die schlauchförmige Faserverstärkung beschichtet wird. Die Beschichtung kann auf der Innen- und/oder Außenseite der Faserverstärkung erfolgen. Die weiteren Koagulations-und Regenerierschritte werden in üblicher Weise durchgeführt. Der abschließende Trokkenprozeß erfolgt bei aufgeblasenem Schlauch bei Temperaturen von insbesondere 90 bis 150° C, die ausreichen, um die thermische Vernetzung der N-Methylolamide durchzuführen. Als künstliche Wursthülle kann der faserverstärkte Celluloseschlauch auf seiner Innen- und/oder Außenseite die für den jeweiligen Wursttyp erforderlichen Beschichtungen aus Kunstharz aufweisen, beispielsweise auf der Innenseite eine Sperrschicht gegenüber Wasserdampf, Wasser und Gasen, insbesondere Luftsauerstoff, aufgebaut aus Vinylidenchlorid-Mischpolymerisat (PVDC), oder eine Beschichtung aus kationischem Harz, insbesondere wasserunlöslichem Epichlorhydrin-Polyaminpolyamid-Harz, zur verbesserten Haftung der Wursthülle an der Wurstmasse beim Trocknen der Wurst.

Selbst bei einem hohen Kunststoffanteil von 30 bis 80 Gew.-% bleibt der Platzdruck und die Dehnung der faserverstärkten Cellulosehülle praktisch unverändert. Erst bei einem Kunststoffanteil von über 50 % nimmt der Quellwert, d.h. das Wasseraufnahmevermögen, merklich, gewöhnlich bis zu 25 % ab. Die Durchlässigkeit gegenüber Wasser und Gasen vermindert sich um 20 bis 40 % und die Aufnahmefähigkeit von Glycerin um 10 bis 40 %. Trotzdem werden bei der Verarbeitung der Hülle, insbesondere beim Füllen und Schälen, selbst bei hohem Kunststoffanteil keine nachteiligen Effekte festgestellt. Im Gegenteil, die Hülle erhält Kunststoffeigenschaften. So wird eine deutlich verringerte Neigung zum Abbau der Cellulose durch cellulytische Enzyme und andere Mikroorganismen bereits bei relativ geringem Anteil des permanenten Weichmachers erreicht. Mit zunehmendem Anteil des permanenten Weichmachers in der Wursthülle wird dieser Effekt verstärkt.

Andererseits wird bereits bei einem geringen Gehalt von nur 3 bis 10 Gew.-% an Mischpolymerisat in der Celluloseschicht ihre Zähigkeit stark erhöht und damit die Platzanfälligkeit und Einreißneigung des glycerinfreien, geschrumpften Materials beträchtlich vermindert, so daß zur Behebung dieses Problems relativ geringe Kunststoffmengen ausreichen. Das in der Celluloseschicht eingelagerte Mischpolymerisat vermindert oder verhindert die Kristallisation der Cellulosemoleküle.

Ein weiterer Vorteil des in das Cellulosematerial eingebauten Mischpolymerisats zeigt sich beim Raffen der schlauchförmigen Hülle. Die Hülle ist besonders geschmeidig und läßt sich ohne Probleme in Falten legen und dicht zusammenpressen. Auch die Fülleigenschaften sind deutlich verbessert. Die Hülle läßt sich auf automatischen Füllmaschinen gut verarbeiten, zeigt keine Neigung zum Platzen und dehnt sich sehr gleichmäßig beim Einpressen des Wurstbräts.

Mit dem Mischpolymerisat versehene Schwammtücher zeigen ebenfalls verbesserte Gebrauchseigenschaften und längere Lebensdauer. Sie besitzen eine höhere Reißfestigkeit und Geschmeidigkeit, auch im trockenen Zustand und nach längerem Gebrauch, und einen verringerten Abrieb. Sie haben verringerte Hydrophilie und damit auch verbesserte Reinigungseigenschaften, was sich in einer verringerten Schlierenbildung beim Abwischen von Glasflächen bemerkbar macht. Außerdem zeigt sich auch hier eine verringerte Anfälligkeit gegenüber Mikroorganismen. Ihr gutes Wasseraufnahmevermögen und Wasserrückhaltevermögen bleibt dagegen nahezu unverändert.

Die Erfindung wird anhand der folgenden Beispiele näher erläutert. Die Messung der Weiterreißfestigkeit und Einreißneigung des Hüllenmaterials wird in Beispiel 1 beschrieben.

Beispiel 1

Zur Verdeutlichung der verringerten Einreißneigung der erfindungsgemäß behandelten Cellulosefolien wird ein Cellulosefaserdarm mit einer PVDC-Sperrschicht auf seiner Innenseite hergestellt, bei dem die Einreißneigung im unbehandelten Zustand besonders stark auftritt.

Zu einer alkalischen Viskoselösung wird kurz vor dem Extrudieren eine wäßrige Dispersion mit einem Anteil von 50 Gew.-% Mischpolymerisat und einem pH-Wert von 8 zugegeben. Das Mischpolymerisat ist ein Polyacrylat, das überwiegend aus Butylacrylat- und zu einem geringen Teil aus Acrylnitril-Einheiten besteht. Außerdem sind noch Methacrylamid-Einheiten mit unvernetzten N-Methylolgruppen und geringere Mengen weiterer copolymerisierter Acryl-bzw. Methacryl-Verbindungen im Mischpolymerisat vorhanden. Die Viskoselösung enthält etwa 7,5 Gew.-% dieses Polyacrylats, bezogen auf die in der Viskoselösung vorhandene Cellulose. Dieser Gewichtsanteil des Polyacrylats, bezogen auf die Cellulose, verändert sich während des Verfahrens praktisch nicht und ist auch im Endprodukt vorhanden.

Ein bahnförmiges Faserpapier wird zu einem Schlauch gebogen und beidseitig mit dieser modifizierten Viskoselösung versehen. Der viskosierte Schlauch durchläuft die üblichen Bäder zur Koagulation und Regenerierung. Der Schlauch aus faserverstärktem Cellulosehydrat-Gel wird durch ein Glycerinbad geführt, so daß der fertiggestellte Schlauch einen Glyceringehalt von etwa 23 Gew.-%, bezogen auf das Gesamtgewicht, aufweist.

Auf der Schlauchinnenseite wird eine wäßrige Dispersion eines hitzevernetzbaren Harzes auf Basis von Epichlorhydrin/Polyaminpolyamid aufgebracht, welches nach der Trocknung eine Verankerungsschicht für die später aufzubringende PVDC-Sperrschicht bildet. Beim abschließenden Trockenprozeß wird der Schlauch im aufgeblasenen Zustand bei 120 bis 150° C über 5 bis 10 Minuten durch einen Trockentunnel geführt. Hierbei erfolgt die thermische Vernetzung der N-Methylolgruppen des Polyacrylats in der Cellulose und die thermische Vernetzung des Harzes auf der Schlauchinnenseite. In einer weiteren Stufe wird die Schlauchinnenseite in üblicher Weise mit einer PVDC-Dispersion zur Ausbildung der Sperrschicht versehen, und der Schlauch erneut getrocknet.

Die Weiterreißfestigkeit der faserverstärkten Cellulosehülle wird nach Herauslösen des Glycerins mit heißem Wasser und Trocknen bis zu einem Feuchtigkeitsgehalt von 6 bis 8 % bestimmt. Aus der Hülle werden in Längs-und Querrichtung jeweils 5 rechteckige Muster herausgeschnitten. Die Messung erfolgt am eingeschnittenen Muster mit einer Zugprüfmaschine nach DIN 53 859, Teil 4. Die Zuggeschwindigkeit beträgt 100 mm/min. Die Weiterreißfestigkeit ist um 18 bis 20 % höher als bei einem Vergleichsschlauch, der den permanenten Weichmacher aus Polyacrylat nicht enthält.

Der erhaltene Faserdarm wird mit Wurstmasse gefüllt, wie sie für Brühwürste typisch ist. Die erhaltene Wurst wird in üblicher Weise mit heißem Wasser behandelt und abgekühlt. Während bei diesen Wursttypen wegen der Platzanfälligkeit der üblichen Cellulose-Faserdärme mit Sperrschicht auf der Innenseite eine Wasserbesprühung beim Abkühlen unerläßlich ist, kann diese Maßnahme bei der erfindungsgemäßen Wursthülle entfallen.

Nach einer Lagerzeit unter extremen Bedingungen (23° C, 50 % r.F.), die sonst nicht üblich sind und zu einer sehr hohen Einreißneigung von Wursthüllen mit innenliegender Sperrschicht führt, wird eine um 20 bis 25 % verringerte Einreißneigung gegenüber Würsten mit faserverstärkten Cellulosehüllen ohne den permanenten Weichmacher festgestellt. Die Einreißneigung wird wie folgt bestimmt: Acht bis zehn Würste werden quer durchgeschnitten, die Einreißlängen bestimmt und ein Mittelwert gebildet.

In der Praxis läßt sich die Wurst problemlos in mehrere Einzelstücke aufteilen, ohne daß die Wursthülle an den Schnittstellen einreißt. Die Teilstücke werden mit einer Zweitverpackung umhüllt und als Portionspackungen in den Handel gebracht.

Beispiel 2

Es wird eine faserverstärkte Cellulosehülle mit innenliegender Sperrschicht analog Beispiel 1 hergestellt. Der Gehalt an Polyacrylat wird deutlich erhöht und beträgt 20 Gew.-%, bezogen auf die Cellulose.

Der Quellwert des Vergleichsmaterials (ohne Sperrschicht, ohne Polyacrylat) beträgt 120 %, die mit Polyacrylat versehene Hülle (ohne Sperrschicht) zeigt einen verringerten Quellwert von 108 %.

Die Weiterreißfestigkeit der glycerinfreien Hülle (mit Sperrschicht) liegt um 30 bis 35 % über der eines Vergleichsmaterials (mit Sperrschicht, ohne Polyacrylat). Eine analog Beispiel 1 hergestellte und gelagerte Wurst zeigt eine um 25 bis 30 % verringerte Einreißneigung verglichen mit Würsten, deren faserverstärkte Cellulosehülle das erfindungswesentliche Mischpolymerisat nicht enthält.

Beispiel 3

Es wird eine Cellulosehülle mit Faserverstärkung analog den vorhergehenden Beispielen hergestellt. Der Gehalt an Polyacrylat beträgt 30 Gew.-%, bezogen auf die Cellulose. Der Quellwert des erhaltenen Schlauches (ohne Sperrschicht) beträgt 100 %. Die glycerinfreie Hülle mit Sperrschicht zeigt eine Weiterreißfestigkeit, die um etwa 50 % höher ist als bei einem entsprechenden Vergleichsmaterial ohne Polyacrylat in der Celluloseschicht. Analog wie in Beispiel 1 und 2 hergestellte und gelagerte Würste zeigen eine verringerte Einreißneigung von 40 bis 45 %.

Beispiel 4

Das folgende Beispiel dient zum Nachweis der verbesserten Resistenz des Cellulosematerials gegen Mikroorganismen aufgrund des zugesetzten Polyacrylats in die Celluloseschicht. Der hergestellte Schlauch besitzt keine Sperrschicht und dient als Wursthülle für Würste vom Salamityp.

Eine zu einem Schlauch gebogene Faserbahn wird nur auf ihrer Außenseite mit der modifizierten Viskoselösung des Beispiels 1 imprägniert. Der Polyacrylat-Anteil ist auf 40 Gew.-%, bezogen auf die Cellulose, erhöht. Die Koagulation und Regenerierung erfolgt auf übliche Weise, der Glyceringehalt wird auf 11 Gew.-%, bezogen auf das Hüllengewicht, eingestellt.

Der Schlauch aus faserverstärktem Cellulosehydrat-Gel wird auf seiner nichtviskosierten Innenseite vor dem Trocknen wie in den vorhergehenden Beispielen mit einer Harzdispersion auf Basis von Epichlorhydrin/Polyaminpolyamid versehen. Die Konzentration ist erhöht, um ein doppeltes Beschichtungsgewicht (ca. 60 mg/m$^2$) zu erhalten. Die Harzimprägnierung dient zur Ausbildung einer Innenschicht zur verbesserten Haftung der Wursthülle am Wurstbrät, wenn dieses beim Trocknen der Wurst Wasser verliert und schrumpft. Der Schlauch wird wie in den vorhergehenden Beispielen getrocknet. Er zeigt eine um 50 % erhöhte Weiterreißfestigkeit.

Die Schlauchhülle wird mit Wurstbrät vom Typ Edelsalami gestopft, und die erhaltene Wurst wird auf der Außenseite mit Edelschimmel besiedelt. Die Wurst wird zur Haltbarmachung längere Zeit an der Luft getrocknet (12-14° C, r.F. 70-85 %), wobei nach ca. 2 Monaten ein Gewichtsverlust der Wurstmasse von 25 bis 30 % auftritt. Die während der Lagerung vom Edelschimmel abgesonderte Cellulase und anderen cellulytischen Enzyme haben die Celluloseschicht praktisch nicht verletzt. Der Abbau durch cellulytische Enzyme ist um 60 % vermindert. Die Cellulosehülle läßt sich ohne ein- oder abzureißen von der getrockneten und geschrumpften Wurstmasse entfernen.

**Patentansprüche**

1. Formkörper, insbesondere flächen- oder schlauchförmige Folie, auf Basis von Cellulose, wobei die Celluloseschicht des Formkörpers einen primären, permanenten Weichmacher enthält, dadurch gekennzeichnet, daß als primärer Weichmacher ein oder mehrere vernetzte Mischpolymerisate vorhanden sind, daß eine oder mehrere der Komponenten dieses Mischpolymerisats aus Monomer-Einheiten mit einer endständigen äthylenisch ungesättigten polymerisierbaren Gruppe oder Einheiten von Maleinsäure- oder Fumarsäureverbindungen bestehen, und daß eine weitere Komponente aus polymerisierten Einheiten mit thermisch vernetzten Gruppen, insbesondere mit thermisch vernetzten Gruppen aus N-Methylolamiden von ungesättigten Carbonsäuren besteht.

2. Formkörper nach Anspruch 1, dadurch gekennzeichnet, daß die Hauptkomponenten des Mischpolymerisats aus Methacrylsäureester- und/oder Acrylsäureester-Einheiten, vorzugsweise mit ($C_1$-$C_8$)-Alkanolen, insbesondere aus Butylmethacrylat-oder Butylacrylat-Einheiten bestehen.

3. Formkörper nach Anspruch 2, dadurch gekennzeichnet, daß der Anteil der Hauptkomponenten im Mischpolymerisat insgesamt gleich/größer ist als 50 Mol-%.

4. Formkörper nach Ansprüchen 2 oder 3, dadurch gekennzeichnet, daß das Mischpolymerisat aus zusätzlich einer oder weiteren Komponenten aus Einheiten mit mehreren Doppelbindungen wie 1,3-Dien, insbesondere Butadien, aus Einheiten von Vinylester, insbesondere Vinylacetat, von Vinyläther, insbesondere Vinyläthyläther, von Vinylaromaten, insbesondere Styrol und Vinyltoluol, von Olefinen, insbesondere Ethylen, von ungesättigten Mono-oder Dicarbonsäuren und ihren Derivaten, insbesondere Methacrylsäure, Acrylsäure, Maleinsäure, Fumarsäure, Itaconsäure, deren Mono- oder Diester von $(C_2\text{-}C_6)$-Alkanolen oder -Alkylendiolen, deren Mono- oder Diamiden und deren Nitril-Verbindungen, insbesondere Methacrylnitril und Acrylnitril, aufgebaut ist, wobei diese Komponenten vorzugsweise jeweils zu maximal 20 Mol-% im Mischpolymerisat vorhanden sind.

5. Formkörper nach einem der Ansprüche 1 bis 4, dadurch gekennzeichnet, daß die Einheiten mit thermisch vernetzten Gruppen N-Methylolderivate von (Meth)acrylamid, Maleinsäuremonoamid oder Maleinsäurediamid und/oder von den Amiden der Fumarsäure oder Itaconsäure umfassen, wobei die N-Methylolgruppe gegebenenfalls veräthert ist, insbesondere mit $(C_1\text{-}C_4)$-Alkanolen.

6. Formkörper nach einem der Ansprüche 1 bis 5, dadurch gekennzeichnet, daß der Anteil der Komponente aus Einheiten mit thermisch vernetzten Gruppen im Mischpolymerisat 0,5 bis 20, insbesondere 2 bis 10 Mol-% beträgt.

7. Formkörper nach einem der Ansprüche 1 bis 6, dadurch gekennzeichnet, daß der Anteil des primären Weichmachers, bezogen auf die Cellulose, 1 bis 100, vorzugsweise 5 bis 90, insbesondere 10 bis 80 Gew.-% beträgt.

8. Formkörper nach einem der Ansprüche 1 bis 7, dadurch gekennzeichnet, daß er einen sekundären Weichmacher, vorzugsweise Glycerin, enthält.

9. Formkörper nach einem der Ansprüche 1 bis 8, dadurch gekennzeichnet, daß er als künstliche Wursthülle aus einem faserverstärkten Schlauch auf Basis von Cellulose aufgebaut ist, der gegebenenfalls einen inneren und/oder äußeren Überzug aus Kunstharz aufweist, wobei sich der primäre Weichmacher in der Cellulose befindet.

10. Verfahren zur Herstellung des Formkörpers nach einem der Ansprüche 1 bis 9, bei dem man Viskose extrudiert, durch saure Koagulations- und Regeneriermittel in Cellulosehydrat-Gel überführt, mit sekundärem Weichmacher behandelt und abschließend trocknet, dadurch gekennzeichnet, daß man zur Viskose vor dem Extrudieren 1 bis 100 Gew.-%, bezogen auf die Cellulose, eines oder mehrerer Mischpolymerisate nach Anspruch 1 hinzugibt, und die thermische Vernetzung insbesondere der N-Methylolamide im abschließenden Trockenprozeß durchführt.

## Claims

1. A cellulose-based molding, in particular a sheet-form or tubular film, where the cellulose layer of said molding contains a primary, permanent plasticizer, characterized in that the primary plasticizer present comprises one or more crosslinked copolymers, that one or more of the components of this copolymer comprise monomer units containing a terminal, ethylenically unsaturated, polymerizable group or units of compounds of maleic acid or fumaric acid, and that a further component comprises polymerized units containing thermally crosslinked groups, in particular containing thermally crosslinked groups comprising N-methylolamides of unsaturated carboxylic acids.

2. The molding as claimed in claim 1, characterized in that the main components of the copolymer comprise methacrylate and/or acrylate units, preferably with $(C_1\text{-}C_8)$-alkanols, in particular butyl methacrylate or butyl acrylate units.

3. The molding as claimed in claim 2, characterized in that the proportion of the main components in the copolymer is in total equal to or greater than 50 mol-%.

4. The molding as claimed in claim 2 or 3, characterized in that the copolymer is additionally constructed from one or more components comprising units having several double bonds, such as a 1,3-diene, in particular butadiene; units of vinyl esters, in particular vinyl acetate; of vinyl ethers, in particular vinyl ethyl ether; of vinylaromatics, in particular styrene and vinyltoluene; of olefins, in particular ethylene; of unsaturated monocarboxylic acids or dicarboxylic acids and derivatives thereof, in particular methacrylic acid, acrylic acid, maleic acid, fumaric acid, itaconic acid, the monoesters or diesters thereof with $(C_2\text{-}C_6)$-alkanols or $(C_2\text{-}C_6)$-alkylenediols, the monoamides or diamides thereof and the nitrile compounds thereof, in particular methacrylonitrile and acrylonitrile, each of these components preferably being present in the copolymer to the maximum extent of 20 mol-%.

5. The molding as claimed in any one of claims 1 to 4, characterized in that the units comprising thermally crosslinked groups are N-methylol derivatives of (meth)acrylamide, maleic monoamide or maleic diamide and/or of the amides of fumaric acid or itaconic acid, the N-methylol group being optionally etherified, in particular by means of $(C_1-C_4)$-alkanols.

6. The molding as claimed in any one of claims 1 to 5, characterized in that the proportion of the component comprising units containing thermally crosslinked groups in the copolymer is 0.5 to 20, in particular 2 to 10 mol-%.

7. The molding as claimed in any one of claims 1 to 6, characterized in that the proportion of primary plasticizer, relative to the cellulose, is 1 to 100, preferably 5 to 90, in particular 10 to 80 % by weight.

8. The molding as claimed in any one of claims 1 to 7, characterized in that it contains a secondary plasticizer, preferably glycerol.

9. The molding as claimed in any one of claims 1 to 8, characterized in that it is made, as a synthetic sausage casing, from a fiber-reinforced, cellulose-based tubing which optionally has an internal and/or external synthetic resin coating, the primary plasticizer being located in the cellulose.

10. A process for the production of the molding as claimed in any one of claims 1 to 9, in which viscose is extruded, converted into cellulose hydrate gel by means of acidic coagulation and regeneration agents, treated with secondary plasticizer and subsequently dried, characterized in that 1 to 100 % by weight, relative to the cellulose, of one or more copolymers as claimed in claim 1 are added to the viscose before extrusion, and the thermal crosslinking, in particular of the N-methylolamides, is carried out in the final drying process.

**Revendications**

1. Article faconné, en particulier film plat ou tubulaire, à base de cellulose, la couche de cellulose de l'article faconné renfermant un plastifiant primaire permanent, caractérisé en ce qu'un ou plusieurs copolymères réticulés sont présents comme plastifiant primaire, qu'un ou plusieurs des composants de ce copolymère comprend (comprennent) des motifs monomères comportant un groupe polymérisable terminal à insaturation éthylénique ou des motifs de dérivés d'acide maléique ou d'acide fumarique, et qu'un autre composant est constitué de motifs polymérisés comportant des groupes réticulés par la chaleur, en particulier des groupes réticulés par la chaleur à base d'amides N-hydroxyméthylés d'acides carboxyliques insaturés.

2. Article selon la revendication 1, caractérisé en ce que les composants principaux du copolymère comprennent des motifs d'ester d'acide méthacrylique et/ou d'ester d'acide acrylique, de préférence avec des alcanols en $C_{1-8}$, en particulier des motifs de méthacrylate de butyle et d'acrylate de butyle.

3. Article selon la revendication 2, caractérisé en ce que le pourcentage en composants principaux du copolymère est globalement égal ou supérieur à 50 moles %.

4. Article selon la revendication 2 ou 3, caractérisé en ce que le copolymère est en outre constitué d'un ou plusieurs composants à base de motifs comportant plusieurs doubles liaisons, tels que 1,3-diènes, en particulier le butadiène, de motifs ester vinylique, en particulier l'acétate de vinyle, d'éthers vinyliques, en particulier d'éther de vinyle et d'éthyle, de composés vinylaromatiques, en particulier le styrène et le vinyltoluène, d'oléfines, en particulier l'éthyléne, d'acides mono- ou dicarboxyliques insaturés et leurs dérivés, en particulier l'acide méthacrylique, l'acide acrylique, l'acide maléique, l'acide fumarique, l'acide itaconique, leurs mono- ou diesters avec des alcanols en $C_{2-6}$ ou des alkylènediols en $C_{2-6}$, leurs mono- ou diamides, et leurs dérivés nitrilés, en particulier le méthacrylonitrile et l'acrylonitrile, ces composants étant de préférence individuellement présents dans le copolymère à raison de 20 moles % au maximum.

5. Article selon l'une des revendications 1 à 4, caractérisé en ce que les motifs à groupes réticulés par la chaleur renferment des dérivés N-hydroxyméthylés du (méth)acrylamide, du monoamide d'acide maléique ou du diamide d'acide maléique, et/ou des amides d'acide fumarique ou d'acide itaconique, le groupe N-hydroxyméthylé étant éventuellement éthérifié, en particulier par des alcanols en $C_{1-4}$.

6. Article selon l'une des revendications 1 à 5, caractérisé en ce que le pourcentage dans le copolymérisat du composant comportant des motifs à groupes réticulés par la chaleur vaut de 0,5 à 20, de préférence de 2 à 10 moles %.

**7.** Article selon l'une des revendications 1 à 6, caractérisé en ce que le pourcentage de plastifiant primaire, par rapport à la cellulose, vaut de 1 à 100, de préférence de 5 à 90, en particulier de 10 à 80 % en poids.

**8.** Article selon l'une des revendications 1 à 7, caractérisé en ce qu'il renferme un plastifiant secondaire, de préférence le glycérol.

**9.** Article selon l'une des revendications 1 à 8, caractérisé en ce que, en tant qu'enveloppe synthétique pour saucisse, il est constitué d'un tube souple renforcé par des fibres en cellulose, qui présente éventuellement un revêtement interne et/ou externe en résine synthétique, le plastifiant primaire se trouvant dans la cellulose.

**10.** Procédé de fabrication de l'article selon l'une des revendications 1 à 9, dans lequel on extrude de la viscose, on la transforme en gel d'hydrate de cellulose par coagulation acide et régénération avec des agents régénérants, on la traite avec un plastifiant secondaire et on la sèche finalement, caractérisé en ce que l'on ajoute à la viscose, avant extrusion, de 1 à 100 % en poids, par rapport à la cellulose, d'un ou de plusieurs copolymère(s) selon la revendication 1, et que l'on réalise la réticulation thermique, en particulier des N-hydroxyméthylamides, lors du séchage final.